# EUROPÄISCHE PATENTSCHRIFT

(11) **EP 3 025 845 B1**
(45) Veröffentlichungstag und Bekanntmachung des Hinweises auf die Patenterteilung: **08.04.2020**
(21) Anmeldenummer: 15003362.9
(22) Anmeldetag: 25.11.2015
(51) Int. Cl.: B29C 48/89, B29C 48/25, B29C 48/10, B29C 48/27

(54) **INNENKÜHLTURM FÜR FOLIENBLASANLAGEN**
INTERNAL COOLING TOWER FOR A FILM BLOWING APPARATUS
TOUR DE REFROIDISSEMENT INTERNE POUR INSTALLATIONS DE SOUFFLAGE DE FEUILLES

(30) Priorität: 28.11.2014 DE 102014017566
(43) Veröffentlichungstag der Anmeldung: 01.06.2016
(73) Patentinhaber: HOSOKAWA ALPINE Aktiengesellschaft, 86199 Augsburg (DE)
(72) Erfinder: Bayer, Bernd, 86399 Bobingen (DE)

(56) Entgegenhaltungen:
- AT-B- 304 058
- DE-C1- 4 405 462
- DE-U1- 9 214 651
- GB-A- 1 331 667
- JP-U- S5 578 416

## Beschreibung

Die Erfindung richtet sich auf einen Innenkühlturm für Folienblasanlagen mit einer oder mehreren übereinander angeordneten Kühlluftdüsen.

Folienblasanlagen bestehen im Allgemeinen aus mindestens einem Extruder, der an einem Folienblaskopf angeschlossen ist und dem Aufschmelzen und Zuführen des Kunststoffgranulats zum Folienblaskopf dient. Im Folienblaskopf wird die geschmolzene Kunststoffmasse gleichmäßig verteilt und tritt durch die Ringdüse aus. Danach wird der Folienschlauch in Längsrichtung abgezogen und durch erhöhten Innendruck aufgrund der in den Folienschlauch zugeführten Luft auf den gewünschten Durchmesser aufgeblasen. Ein Kalibrierkorb der zwischen Folienblaskopf und Abzugsvorrichtung angeordnet ist stützt und führt den aufgeblasenen Folienschlauch. Nach dem Abkühlen des Folienschlauches durch Luftkühlung von innen und / oder von außen wird der Folienschlauch in einer Abzugsvorrichtung flachgelegt und anschließen aufgewickelt.

Zur Innenkühlung dient ein Innenkühlturm. Die Kühlluft wird dem Innenkühlturm über Zuführungen im Folienblaskopf zugeleitet. Der Innenkühlturm ist je nach Anwendung aus einer oder mehreren Kühlluftdüsenebenen aufgebaut. Diese variieren in Durchmesser und Anzahl. Durch die Düsen wird Kühlluft definiert von innen an die Folienblase geleitet. Die Folieneigenschaften hängen von der Qualität und Quantität der Luft ab.

In der DE 25 55 848 A1 und der DE 100 29 175 B4 sind Folienblasanlagen beschrieben, die eine Innenkühlvorrichtung aufweisen durch die die Folienblase von innen gekühlt wird.

Aus der GB 1331667 ist einen Innenkühlturm für eine Folienblasanlage bekannt. Die Kühlluft wird im Innenkühlturm durch Kühlelemente gekühlt und durch eine Gebläse in Bewegung gehalten, sodass sie zwischen Innenkühlturm und Folienblase .zirkuliert. Der Innenkühlturm weist eine rotierende Kühldüse auf. Diese hat u.a. auch die Aufgabe kondensierbare Unreinheiten aus der Kühlluft zu entfernen, indem diese Unreinheiten gezielt an der entsprechend geformten Kühldüse durch den Düsenspalt in darüber und darunter gelegene Sammeleinrichtungen abgeleitet wird.

Die AT 304 058 beschreibt ein Verfahren und eine Vorrichtung zum Herstellen von abwärts stranggepressten Schlauchfolien die von außen in einem Kühlbad mit Kühlflüssigkeit gekühlt wird sowie von innen mit einem Kühldorn gekühlt wird. Dieser Kühldorn weist über seine Höhe Sammelräume auf, um Stoffe aufzufangen, die an der Oberfläche des Kühldorn kondensieren aufzufangen.

Die DE 92 14 651 zeigt ebenfalls eine Vorrichtung zum Herstellen von Schlauchfolie mit einer Innenkühlung, deren Kühlluftdüsen im Durchmesser an die Folienblase anpassbar ist.

Die DE 44 05 462 offenbart einen Folienblaskopf mit einem Innenkühlturm aus übereinander angeordneten Kühlluftringen mit Kühlluft-Austrittsspalten und dazwischen liegenden Saugspalten zum Absaugen von mit Luft gemischten Monomerdämpfen.

Die JP S55 78416 U 30 offenbart einen weiteren Folienblaskopf mit einem Innenkühlturm.

Bei der Herstellung von Folien in Folienblasanlagen kommen unterschiedliche Thermoplaste und Additive zum Einsatz. Im Blasfolienprozess diffundieren niedermolekulare Bestandteile der Rohstoffe, wie zum Beispiel Monomere, Paraffine oder Additive, beim Austritt der Folie aus dem Folienblaskopf aus der Folie aus. Sie reichern sich in der Luft innerhalb und außerhalb der Folienblase an. Diese Partikel treffen auf den heißen Kühlturm und schmelzen auf, sie sammeln sich und bilden Tropfen. Diese Tropfen laufen an der Außenwand des Kühlturms und in den Kühlluftdüsen nach unten bis zum Düsenspalt. Dort werden sie vom Kühlluftstrom mitgerissen und an die Folienblase geschleudert. Es kommt zu einer Verunreinigung der Folien oder zu Entstehung von Löchern in der Folienblase.

Der Erfindung liegt daher die Aufgabe zugrunde, eine Lösung zu schaffen, die es ermöglicht, einen Innenkühltürm für Folienblasanlagen bereitzustellen bei dem das Mitreißen der Tropfen aus den während der Blasfolienprozesses aus der Folie ausdiffundierten niedermolekularen Bestandteilen des Rohstoffes durch den Kühlluftstrom vermieden wird.

Bei einem Innenkühlturm der eingangs beschriebenen Art wird die Aufgabe erfindungsgemäß durch das Kennzeichen des Hauptanspruchs gelöst.
Der Innenkühlturm weist Kühlluftdüsen auf, die an der Düsenoberseite auf Höhe des Düsenspaltes auf der Innenseite und der Außenseite eine rinnenförmige Kontur aufweisen.

Ein Innenkühlturm ist aus mehreren übereinanderliegenden Kühldüsenebenen aufgebaut. Die Kühldüsen werden von einer konzentrisch um das Luftabsaugrohr angeordneten Kühlluftzuführung gespeist. Die Kühlluftdüsen sind konzentrisch um die Kühlluftzuführeinrichtung angeordnet. Sie werden über eine Mehrzahl an ihrer zum Kühlluftzuführrohr angrenzenden Wandung gleichmäßig über den Umfang angeordneten Öffnungen mit Kühlluft gespeist. Zur Kühlung können auch andere gasförmige Kühlmedien genutzt werden. Die Kühlluft wird über Düsenspalte am radial äußeren Umfang der Kühlluftdüsen gegen die Folie geblasen. Jede dieser Kühlluftdüsen besteht aus einem Düsenober- und -unterteil.

Die Düsenoberteile werden an der den Düsenspalt begrenzenden Bereich auf der Innen- und Außenseite mit einer rinnenförmigen Kontur versehen. Dadurch ergeben sich am Düsenspalt innen wie außen Rinnen in denen sich die Tropfen der niedermolekularen Bestandteile des Rohstoffs sammeln können. Sie werden so von Düsenspalt ferngehalten und werden nicht mit dem Kühlluftstrom mitgerissen und gegen die Folienblase geschleudert.

Die Innenkonturen der Düsenober- und unterteile sind mit Gefälle versehen.

Die Innenkontur der Düsenoberteils wird mit einem Gefälle in Richtung der Kühlturmachse ausgebildet. Durch dieses Gefälle kommt es nicht zu einem Abtropfen der aufgeschmolzenen Bestandteile, sondern die Tropfen können am Düsenoberteil nach innen hinten abfließen. Sie sammeln sich in einem rückwertigen Tropfensammelbecken im Düsenunterteil.

Die Innenkontur des Düsenunterteils wird ebenfalls mit einem Gefälle in Richtung der Kühlturmachse versehen, so dass entstehende Tropfen über den Boden in den hinteren Teil des Düsenunterteils abfließen können und im Tropfensammelbecken aufgefangen werden.

Die Rinnen an der Innen- und Außenseite des Düsenspalts und das Tropfensammelbecken im Düsenunterteil können über Absaugvorrichtungen oder Ablaufvorrichtung geleert werden.

Die Düsenoberteile und Düsen unterteile werden vorzugsweise aus thermisch isolierenden Werkstoffen hergestellt. Die Düsenoberteile werden vorzugsweise aus Phenolharzverbundwerkstoff gefertigt, Es werden so geringere Oberflächentemperaturen erreicht. Dadurch wird das Aufschmelzen der Partikel minimiert.

Durch die spezielle Kontur an den Düsenspalten in Form von Rinnen sowie die Innenkonturen der Düsenober- und unterteile können die aus der Folie diffundierten niedermolekularen Bestandteile des Rohstoffes, welche auf die Oberflächen des heißen Kühlturms treffen, dort aufschmelzen und sich zu Tropfen sammeln, nicht in den Kühlluftstrom tropfen und auf die Folienblase geschleudert werden. Die Folie wird nicht verunreinigt oder beschädigt.

Durch die erfindungsgemäße Ausformung der Kühlluftdüsen, können Reinigungsinterwalle der Kühlvorrichtungen deutlich verlängert werden und im Idealfall vermieden werden. Der Reinigungsaufwand bei Folienblasanlagen ist immer sehr groß, wenn Rohstoffe mit hohen Anteilen an niedermolekularen Bestandteilen eingesetzt werden. Dies bedeutet Anlagenstillstandzeiten für die Reinigung der Innenkühltürme.

Weitere Einzelheiten, Merkmale und Vorteile des Gegenstandes der Erfindung ergeben sich aus den Unteransprüchen sowie aus der nachfolgenden Beschreibung der zugehörigen Zeichnungen, in der beispielhaft ein bevorzugtes Ausführungsbeispiel der Erfindung dargestellt ist.

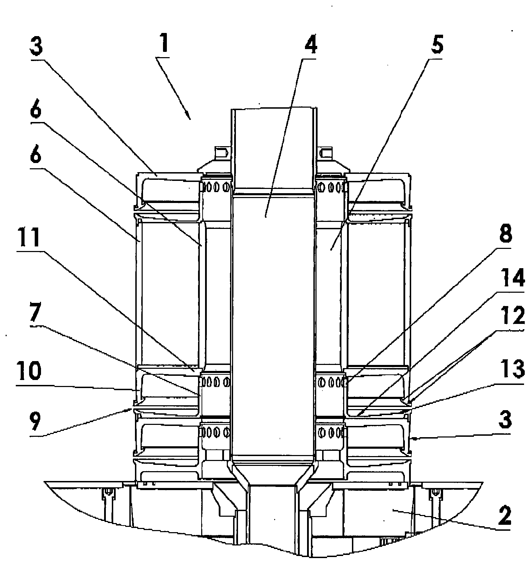

Figur 1 zeigt einen Längsschnitt durch einen Innenkühlturm und Teilbereiche des Folienblaskopfs.

In der Figur 1 ist ein Innkühlturm (1) mit erfindungsgemäß ausgebildeten Luftdüsen (3) im Längsschnitt dargestellt. Unterhalb des Innenkühlturms (1) ist ein Tell des Folienblaskopfs (2) zu sehen auf den der Innenkühlturm (1) montiert ist. Das Abluftrohr (4) leitet die erwärmte Kühlluft aus der Folienblase durch den Innenkühlturm (1) und den Follenblaskopf (2) heraus. Die Kühlluftzuführung (5) ist konzentrisch um das Abluftrohr (4) angeordnet. Diese Rohre (4, 5) werden von einer oder mehreren Kühlluftdüsen (3) konzentrisch umgeben. Die Kühlluftdüsen (3) können auch über zylindrische Abstandstücke (6) voneinander in Längsrichtung beabstandet sein. Die Kühlluftdüsen (3) werden über an ihrer radial innen liegenden Wand (7) mit über den Umfang gleichmäßig verteilte Luftöffnungen (8) mit Kühlluft aus der Kühlluftzuführung (5) versorgt. Die Kühlluft wird über die radial außen liegenden Düsenspalte (9) auf die Folienblase geführt.

Die vordere Kühlluftdüsenwand (10), die in der dargestellten Ausführungsform zum Düsenoberteil (11) gehört, weist im Bereich des Düsenspalts (9) an der Düseninnenseite und der Düsenaußenseite eine rinnenförmige Kontur (12) auf. Diese Rinnen (12) dienen dem Auffangen, der an den senkrecht oder nahezu senkrecht ausgebildeten Flächen abfließenden Tropfen aus niedermolekularen Bestandteilen der Rohstoffe, die auf dem heißen Innenkühlturm aufschmelzen.

Die vordere Kühldüsenwand (10) kann eine einheitliche Wandstärke aufweisen. In einer anderen Ausgestaltung der Erfindung weist die vordere Kühldüsenwand (10) eine von oben nach unten abnehmende Wandstärke auf. Dadurch weist die Innenwand ein Gefälle nach außen und die Außenwand ein Gefälle nach innen auf.

Die Innenkontur des Düsenoberteils (11) weist ebenfalls ein Gefälle auf. Dieses ist so ausgebildet, dass es radial nach innen ausgebildet ist, sodass die sich an dieser Oberfläche niedergeschlagenen Tropfen radial nach innen zur hinteren Kühldüsenwand (7) abfließen können.

Die Innenkontur des Düsenunterteils (13) ist ebenfalls mit einem radial nach innen zur hinteren Kühldüsenwand (7) gerichteten Gefälle ausgebildet.

An der tiefsten Stelle der Kühlluftdüse (3) ist ein Tropfensammelbecken (14) ausgebildet. Die Innenkontur des Düsenunterteils (13) kann auch mit einem mittig angeordneten Tropfensammelbecken (14) ausgeführt werden, auf welches der Düsenboden von beiden Seiten mit Gefälle zuläuft. Das Tropfensammelbecken (14) kann auch außerhalb der Mitte angeordnet werden.

Die sich im Tropfensammelbecken (14) und in den Rinnen (12) im Außenbereich und Innenbereich des Düsenspaltes (9) gesammelten Tropfen können über eine hier nicht dargestellte Absaugvorrichtung oder Ablaufvorrichtung entleert werden.

Die Gefälle der Innenkonturen der Düsenoberteile und Düsenunterteile können über den Radius variieren.

### Bezugszeichen

- 1: Innenkühlturm
- 2: Folienblaskopf
- 3: Kühlluftdüse
- 4: Abluftrohr
- 5: Kühlluftzuführung
- 6: Abstandsstück
- 7: hintere Kühlluftdüsenwand
- 8: Luftöffnung
- 9: Düsenspalt
- 10: vordere Kühlluftdüsenwand
- 11: Düsenoberteil
- 12: rinnenförmige Kontur (Rinne)
- 13: Düsenunterteil
- 14: Tropfensammelbecken

## Patentansprüche

1. Innenkühlturm (1) einer Folienblasanlage mit einer oder mehreren übereinander angeordneten Kühlluftdüsen (3) **dadurch gekennzeichnet, dass** das Düsenoberteil (11) der Kühlluftdüsen (3) auf Höhe des Düsenspaltes (9) auf der Innenseite und der Außenseite mit einer rinnenförmigen Kontur (12) zum Sammeln von Tropfen von niedermolekularen Bestandteilen des Folienrohstoffs ausgebildet ist.

2. Innenkühlturm (1) nach Anspruch 1 **dadurch gekennzeichnet, dass** die rinnenförmige Konturen (12) auf der Innenseite und Außenseite des Düsenspaltes (9) der Düsenoberteile (11) mit einer Absaugvorrichtung oder Ablaufvorrichtung ausgerüstet ist.

3. Innenkühlturm (1) nach Anspruch 1 **dadurch gekennzeichnet, dass** die Innenkontur des Düsenoberteils (11) mit Gefälle ausgeführt ist.

4. Innenkühlturm (1) nach Anspruch 3 **dadurch gekennzeichnet, dass** die Innenkontur des Düsenoberteils (11) ein Gefälle nach radial innen aufweist.

5. Innenkühlturm (1) nach Anspruch 1 **dadurch gekennzeichnet, dass** die Innenkontur der Düsenunterteils (13) mit Gefälle ausgeführt ist.

6. Innenkühlturm (1) nach Anspruch 5 **dadurch gekennzeichnet, dass** die Innenkontur der Düsenunterteils (13) ein Gefälle nach radial innen aufweist.

7. Innenkühlturm (1) nach Anspruch 3 und / oder 5 **dadurch gekennzeichnet, dass** die Innenkontur des Kühldüsenunterteils (13) an der tiefsten Stelle ein Tropfensammelbecken (14) aufweist.

8. Innenkühlturm (1) nach Anspruch 7 **dadurch gekennzeichnet, dass** das Tropfensammelbecken (14) mit einer Absaugvorrichtung oder Ablaufvorrichtung ausgerüstet ist.

9. Innenkühlturm (1) nach Anspruch 3 und / oder 5 **dadurch gekennzeichnet, dass** die Kühldüsenoberteile (11) und Kühldüsenunterteile (13) aus thermisch isolierenden Werkstoffen bestehen.

## Claims

1. Internal cooling tower (1) of a film blowing line with one or more cooling air nozzles (3) arranged one above the other, **characterised in that** on a level with the nozzle gap (9), the top side (11) of the cooling air nozzles (3) has a channel-like contour (12) on the inside and the outside which is designed to collect the drops of low-molecular-weight constituents of the film raw material.

2. Internal cooling tower (1) in accordance with Claim 1, **characterised in that** the channel-like contours (12) on the inside and outside of the nozzle gap (9) of the top nozzle sides (11) are equipped with an extraction unit or draining device.

3. Internal cooling tower (1) in accordance with Claim 1, **characterised in that** the inside contour of the top nozzle side (11) is designed to have gradients.

4. Internal cooling tower (1) in accordance with Claim 3, **characterised in that** the inside contour of the top nozzle side (11) has a gradient that runs radially from the outside in.

5. Internal cooling tower (1) in accordance with Claim 1, **characterised in that** the inside contour of the bottom nozzle side (13) is designed to have gradients.

6. Internal cooling tower (1) in accordance with Claim 5, **characterised in that** the inside contour of the bottom nozzle side (13) has a gradient that runs radially from the outside in.

7. Internal cooling tower (1) in accordance with Claim 3 and/or 5, **characterised in that** the inside contour of the bottom side of the cooling nozzle (13) exhibits a reservoir for drops (14) at its lowest point.

8. Internal cooling tower (1) in accordance with Claim 7, **characterised in that** the reservoir for drops (14) is equipped with an extraction unit or drain device.

9. Internal cooling tower (1) in accordance with Claim 3 and/or 5, **characterised in that** the top sides of the cooling nozzles (11) and the bottom sides of the cooling nozzles (13) are made of thermally insulating materials.

## Revendications

1. Tour de refroidissement interne (1) d'une installation de soufflage de film, équipée d'une buse d'air de refroidissement, ou de plusieurs buses (3) disposées les unes au-dessus des autres, **caractérisée par le fait que** la partie supérieure (11) des buses d'air de refroidissement (3) est formée à la hauteur de la fente de buse (9), du côté intérieur et du côté extérieur, d'un contour annulaire (12) pour collecter les gouttes de composants de faible masse moléculaire du matériau des films.

2. Tour de refroidissement interne (1) selon la revendication 1, **caractérisée par le fait que** les contours annulaires (12) du côté intérieur et extérieur de la fente de buse (9) des parties supérieures de buse (11) sont équipés d'un dispositif d'aspiration ou d'un dispositif d'écoulement.

3. Tour de refroidissement interne (1) selon la revendication 1, **caractérisée par le fait que** le contour intérieur de la partie supérieure de la buse (11) présente une déclivité.

4. Tour de refroidissement interne (1) selon la revendication 3, **caractérisée par le fait que** le contour intérieur de la partie supérieure de la buse (11) présente une déclivité radiale vers l'intérieur.

5. Tour de refroidissement interne (1) selon la revendication 1, **caractérisée par le fait que** le contour intérieur de la partie inférieure de la buse (13) présente une déclivité.

6. Tour de refroidissement interne (1) selon la revendication 5, **caractérisée par le fait que** le contour intérieur de la partie inférieure de la buse (13) présente une déclivité radiale vers l'intérieur.

7. Tour de refroidissement interne (1) selon la revendication 3 et/ou 5 **caractérisée par le fait que** le contour intérieur de la partie inférieure de la buse de refroidissement (13) présente à l'endroit le plus bas une cuvette de collecte des gouttes (14).

8. Tour de refroidissement interne (1) selon la revendication 7, **caractérisée par le fait que** la cuvette de collecte des gouttes (14) est équipée d'un dispositif d'aspiration ou d'un dispositif d'écoulement.

9. Tour de refroidissement interne (1) selon la revendication 3 et/ou 5, **caractérisée par le fait que** les parties supérieures (11) et parties inférieures (13) des buses de refroidissement sont constituées de matériaux isolants thermiques.
